# EUROPEAN PATENT SPECIFICATION

(11) **EP 3 804 151 B1**
(45) Date of publication and mention of the grant of the patent: **25.06.2025**
(21) Application number: 18739803.7
(22) Date of filing: 03.07.2018
(51) Int. Cl.: H04B 1/7073

(54) **TIME INTERLEAVING CODE DIVISION MULTIPLE ACCESS (CDMA) SYSTEM FOR CLOCK RECOVERY**
SYSTEM MIT ZEITVERSCHACHTELTEM CODE DIVISION MULTIPLE ACCESS (CDMA) ZUR TAKTWIEDERHERSTELLUNG
SYSTÈME D'ACCÈS MULTIPLE PAR RÉPARTITION EN CODE À ENTRELACEMENT TEMPOREL (CDMA) POUR RÉCUPÉRATION D'HORLOGE

(43) Date of publication of application: 14.04.2021
(73) Proprietor: HUAWEI TECHNOLOGIES CO., LTD., Shenzhen, Guangdong 518129 (CN)
(72) Inventor: EL BAHAR, Roni, 80992 Munich (DE); FISHER, Avi, 80992 Munich (DE); LEVI, Shmuel, 80992 Munich (DE); CUNIO, Dan, 80992 Munich (DE)
(74) Representative: Maiwald GmbH
(86) International application number: PCT/EP2018/067924
(87) International publication number: WO 2020/007451

(56) References cited:
- EP-A2- 0 960 485
- EP-B1- 0 960 485
- US-A1- 2001 001 616
- US-A1- 2003 031 195
- US-A1- 2005 259 723

## Description

### BACKGROUND

The present invention relates to improving Clock and Data Recovery (CDR) in a Code synchronizing a Code Division Multiple Access (CDMA) transmission and, more specifically, to improving CDR in a CDMA transmission using an unmodulated synchronization sequence which is time interleaved with the CDMA stream.

The CDMA is a multiple access scheme in which multiple transmissions may share a common frequency band (spectrum segment) widely used for a plurality of telecommunications systems and applications. CDMA technology presents some significant advantages compared to other communication technologies in terms of overall performance and specifically in terms of spectrum efficiency.

CDMA uses spread spectrum technology with the use of different codes to separate between different communicator (e.g. stations, users, etc.) rather than different frequencies as done in Frequency Division Multiple Access (FDMA) or different time slots as done in Time Division Multiple Access (TDMA). As such, In CDMA every communicator is allocated the entire spectrum assigned to the CDMA transmission all of the time while the channels are identified by their assigned codes.

CDMA employs unique spreading codes to spread the baseband data before transmission. The signal is transmitted in a channel, which is below noise level and the receiver may use a correlator to de-spread the desired signal from the received transmission and pass the de-spread signal through a narrow bandpass filter. Unwanted signals on the other hand are not be de-spread and may not pass through the filter.

US2001/001616A1 describes a system for bidirectional communication of digital data between a central unit and a remote unit wherein the need for tracking loops in the central unit has been eliminated. It is described that the central unit transmitter generates a master carrier and a master clock signal which are used to transmit downstream data to the remote units, and that the remote units recover the master carrier and master clock and synchronize local oscillators in each remote unit to these master carrier and master clock signals to generate reference carrier and clock signals for use by the remote unit receiver. It is described that these reference carrier and clock signals are also used by the remote unit transmitters to transmit upstream data to the central unit, and that the central unit receiver detects the phase difference between the reference carrier and clock signals from the remote units periodically and adjusts the phase of the master carrier and master clock signals for use by the central unit receiver to receive the upstream data.

US2003/031195A1 describes a DS-CDMA transmission method capable of improving the accuracy of channel estimation using pilot symbols by eliminating cross-correlation between pilot symbols inserted into code channels in CDMA multiplexing carrying out fast signal transmission. It is described that in each frame assembler, the pilot symbols, which are used for channel estimation for coherent detection, are inserted into coded information data on code channels at fixed intervals, and then the data is modulated by the modulator. It is described that the modulated data symbols in each code channel from the modulator are spread by the spreading modulator, the pilot symbols are spread using a spreading code, whereas the information symbols are spread using different spreading codes assigned to respective code channels, and that the spread signals of the code channels are summed up by the adder to be transmitted.

US2005/259723A1 describes a communication system and receiver that facilitates increased message size in a communication system that supports a large number of transmitters sharing a common frequency band. It is described that the communication system facilitates increased message size by incorporating a plurality of transmit bit sets in each burst of data, and that the additional transmit bit sets are incorporated into a plurality of transmit codes that are generated using at least one additional spreading code that is orthogonal to the base spreading code. It is described that the plurality of transmit codes are then combined into one composite message and the composite message is spread again using another scrambling sequence, and that the final composite spread message is transmitted to the receiver in the appropriate message time slot, resulting in CDM/TDMA burst signal that facilitates increased message size.

EP0960485A2 describes an apparatus and method for code tracking in an IS-95 spread spectrum communications system. It is described that a pseudo-noise generator generates an on-time component, an early component and a late component of a pseudo-noise code signal in response to an error signal, and that the on-time component is routed to a deinterleave and demodulate device which demodulates and decodes baseband signals from received spread spectrum signals. It is described that an adder substracts the early component from the late component to form a summation signal, and a multiplier multiplies the summation with the received signal to form a product signal, and an integrator integrates the product signal to form the error signal. It is described that the error signal is fed back into the pseudo-noise generator to fine tune the on-time component, the early component and the late component of the pseudo-noise code signal, and that as a result, a spread spectrum signal is demodulated and decoded using only one correlator instead of two.

### SUMMARY

According to the present invention there is provided a Code Division Multiple Access (CDMA) receiver and a method of decoding data of one or more channels of a received (CDMA) according to claims 1 and 2 resp.

Unless otherwise defined, all technical and/or scientific terms used herein have the same meaning as commonly understood by one of ordinary skill in the art to which the invention pertains. Although methods and materials similar or equivalent to those described herein can be used in the practice or testing of embodiments of the invention, exemplary methods and/or materials are described below. In case of conflict, the patent specification, including definitions, will control. In addition, the materials, methods, and examples are illustrative only and are not intended to be necessarily limiting.

Implementation of the method and/or system of embodiments of the invention can involve performing or completing selected tasks manually, automatically, or a combination thereof. Moreover, according to actual instrumentation and equipment of embodiments of the method and/or system of the invention, several selected tasks could be implemented by hardware, by software or by firmware or by a combination thereof using an operating system.

For example, hardware for performing selected tasks according to embodiments of the invention could be implemented as a chip or a circuit. As software, selected tasks according to embodiments of the invention could be implemented as a plurality of software instructions being executed by a computer using any suitable operating system. In an exemplary embodiment of the invention, one or more tasks according to exemplary embodiments of method and/or system as described herein are performed by a data processor, such as a computing platform for executing a plurality of instructions. Optionally, the data processor includes a volatile memory for storing instructions and/or data and/or a non-volatile storage, for example, a magnetic hard-disk and/or removable media, for storing instructions and/or data. Optionally, a network connection is provided as well. A display and/or a user input device such as a keyboard or mouse are optionally provided as well.

### BRIEF DESCRIPTION OF THE SEVERAL VIEWS OF THE DRAWINGS

Some embodiments of the invention are herein described, by way of example only, with reference to the accompanying drawings. With specific reference now to the drawings in detail, it is stressed that the particulars shown are by way of example and for purposes of illustrative discussion of embodiments of the invention. In this regard, the description taken with the drawings makes apparent to those skilled in the art how embodiments of the invention may be practiced.

In the drawings:
FIG. 1 is a flowchart of an exemplary process of time interleaving an unmodulated synchronization sequence in a CDMA stream, according to some embodiments of the present invention;
FIG. 2 is a flowchart of an exemplary process of extracting data from a CDMA stream decoded using an unmodulated synchronization sequence for improved CDR, according to some embodiments of the present invention;
FIG. 3 is a schematic illustration of an exemplary CDMA transmitter transmitting a CDMA stream to an exemplary CDMA receiver, according to some embodiments of the present invention;
FIG. 4 is a schematic illustration of an exemplary CDMA stream interleaved with an unmodulated synchronization sequence, according to the present invention;
FIG. 5 is a block diagram of an exemplary receiver process of synchronizing a sampling clock for a received CDMA stream using an unmodulated synchronization sequence which is time interleaved in the CDMA stream, according to some embodiments of the present invention;
FIG. 6A and FIG. 6B are waveforms of exemplary simulated CDMA streams interleaved with an unmodulated synchronization sequence, according to the present invention;
FIG. 7 presents waveforms of exemplary unmodulated synchronization sequence time interleaved in a received CDMA stream and unmodulated synchronization sequence locally generated in a CDMA receiver during a locking sequence, according to some embodiments of the present invention;
FIG. 8 is a graph chart of a voltage input to a Voltage Controlled Oscillator (VCO) of an exemplary CDMA receiver during a CDR lock, according to some embodiments of the present invention;
FIG. 9 is a graph chart presenting a time shift between a clock of an exemplary CDMA transmitter and a sampling clock of an exemplary CDMA receiver during a CDR lock, according to some embodiments of the present invention;
FIG. 10 is a schematic illustration of an exemplary deployment of a CDMA central office transmitting a CDMA stream time interleaved with unmodulated synchronization sequences to a plurality of CDMA nodes which use the unmodulated synchronization sequences for CDR, according to some embodiments of the present invention; and
FIG. 11 is a schematic illustration of exemplary downstream and upstream CDMA streams time interleaved with unmodulated synchronization sequences exchanged between a CDMA central office and a plurality of CDMA, according to some embodiments of the present invention.

### DETAILED DESCRIPTION

The present invention, in some embodiments thereof, relates to improving CDR in a Code synchronizing a Code Division Multiple Access (CDMA) transmission and, more specifically, to improving CDR in a CDMA transmission using an unmodulated synchronization sequence which is time interleaved with the CDMA stream.

The present invention presents systems and methods for time interleaving one or more unmodulated synchronization sequence in a CDMA stream transmitted by a CDMA transmitter in order to improve CDR at one or more CDMA receivers receiving the CDMA transmission and using the unmodulated synchronization sequence(s) for synchronizing their local sampling clock(s) to the clock of the CDMA transmitter.

The CDMA transmitter adjusts a CDMA stream comprising one or more CDMA sequences (channels) by adding (inserting) one or more time intervals to the CDMA stream such that the time intervals are assigned a separate time slot from a time slot of the CDMA sequences. The time intervals contain an unmodulated (not modulated) synchronization sequence which is based on a Barker code having a unique autocorrelation function presenting a substantially linear deviation error with respect to a delay offset of the unmodulated synchronization sequence. As such, the unmodulated synchronization sequence presents an extremely low autocorrelation and/or cross-correlation with other transmitted signals and is therefore highly immune to interference.

The CDMA communication scheme employs spread spectrum, such that after encoded (converted to symbols using the assigned code) the data of each of the CDMA sequences is be spread over the overall frequency band (spectrum) assigned to the CDMA transmission. The inserted unmodulated synchronization sequence(s) on the other hand is not CDMA modulated meaning that it is neither encoded nor spread but rather the unmodulated synchronization sequence(s) is allocated the entire frequency band (spectrum) of the CDMA transmission.

One or more CDMA receivers receiving the CDMA transmission may recover the clock and data (CDR) from the adjusted CDMA stream using the unmodulated synchronization sequence(s), i.e. the Barker code for synchronizing their local sampling clock(s) to the clock of the CDMA transmitter and use the recovered sampling clock to decode (recover) the data from the adjusted CDMA stream, specifically the data encoded with their assigned code.

Optionally, multiple CDMA receivers may use the same unmodulated synchronization sequence for CDR.

The CDMA receiver(s) may use early-late correlators for locking its local sampling clock to the clock embedded in the CDMA sequence(s) and hence synchronize with the clock of the CDMA transmitter. Each CDMA receiver may include an early correlator and a late correlator each comprising a multiplier, an integrate & dump filter and a sample & hold function. Each of the two correlators is driven with an unmodulated synchronization sequence locally generated using the local sampling clock of the CDMA receiver. The early correlator is driven with a left shifted phase (-180 degrees) version of the locally generated unmodulated synchronization sequence while the late correlator is driven with a right shifted phase (+180 degrees) version of the locally generated unmodulated synchronization sequence.

The shifted locally generated unmodulated synchronization sequences are multiplied in each of the correlators and the output is driven to the respective integrate & dump filters. The correlators may be adapted to process only the unmodulated synchronization sequences detected in the received adjusted CDMA stream while skipping the encoded data, i.e. the CDMA sequences. The output from the integrate & dump filters is therefore driven to the respective sample & hold functions which hold the result until the next unmodulated synchronization sequences is detected in the received adjusted CDMA stream.

The output of the two sample & hold functions is aggregated, for example, joined, subtracted and/or the like and used to control a Voltage Control Oscillator (VCO) which generates the sampling clock of the CDMA receiver. The sampling clock which is used to decode the CDMA sequence(s) is also fed back to a synchronization code generator of the CDMA receiver which generates the shifted phase unmodulated synchronization sequences driven to the early and late correlators. The closed loop implementation results in the CDMA receiver local sampling clock gradually locking (synchronizing) to the clock embedded in the adjusted CDMA stream received from the CDMA transmitter.

The adjusted CDMA stream comprising the time intervals containing the unmodulated synchronization sequences may present significant improvement in CDR for CDMA protocols, infrastructures, systems and/or the like compared to existing methods, implementations and/or techniques employed for CDR in CDMA transmissions.

First, while the unmodulated synchronization sequence is time multiplexed (interleaved) in the CDMA stream the unmodulated synchronization sequence is not CDMA modulated, i.e. not encoded and not spread over the frequency band (spectrum) assigned to the CDMA transmission but rather occupies the entire frequency band of the CDMA. The Signal to Noise Ratio (SNR) of the unmodulated synchronization sequence may therefore be significantly improved compared to each of the CDMA channels which are modulated and spread over the CDMA frequency band. The improved SNR may naturally increase immunity of the unmodulated synchronization sequence to interference induced by other signal(s) which may modify, disrupt and/or affect the CDMA transmission. This may be a major benefit compared to existing methods and systems which may use a dedicated channel of the CDMA stream for CDR, i.e. for inserting timing recovery data since such dedicated channel(s) is modulated and spread over the CDMA frequency band thus presenting a significantly lower SNR.

Moreover, the unique autocorrelation function of the Barker code used to generate the unmodulated synchronization sequence is characterized by a significantly low cross-correlation with other sequences. The immunity and robustness of the unmodulated synchronization sequence to interference is therefore further increased.

Furthermore, the unique autocorrelation function of the Barker code may significantly improve the CDR in particular expedite the locking of the CDMA receiver sampling clock to the CDMA transmitter clock embedded in the CDMA sequence. Reducing the locking time, i.e. the time to synchronize the CDMA receiver clock to CDMA transmitter clock and hence reducing the synchronization period may significantly reduce communication latency.

Before explaining at least one embodiment of the invention in detail, it is to be understood that the invention is not necessarily limited in its application to the details of construction and the arrangement of the components and/or methods set forth in the following description and/or illustrated in the drawings and/or the Examples.

The present invention may be a receiver or a method.

Aspects of the present invention are described herein with reference to flowchart illustrations and/or block diagrams of methods or apparatus

The flowchart and block diagrams in the Figures illustrate the architecture, functionality, and operation of possible implementations of systems and methods according to various embodiments of the present invention. In this regard, each block in the flowchart or block diagrams may represent a module, segment, or portion of instructions, which comprises one or more executable instructions for implementing the specified logical function(s). In some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

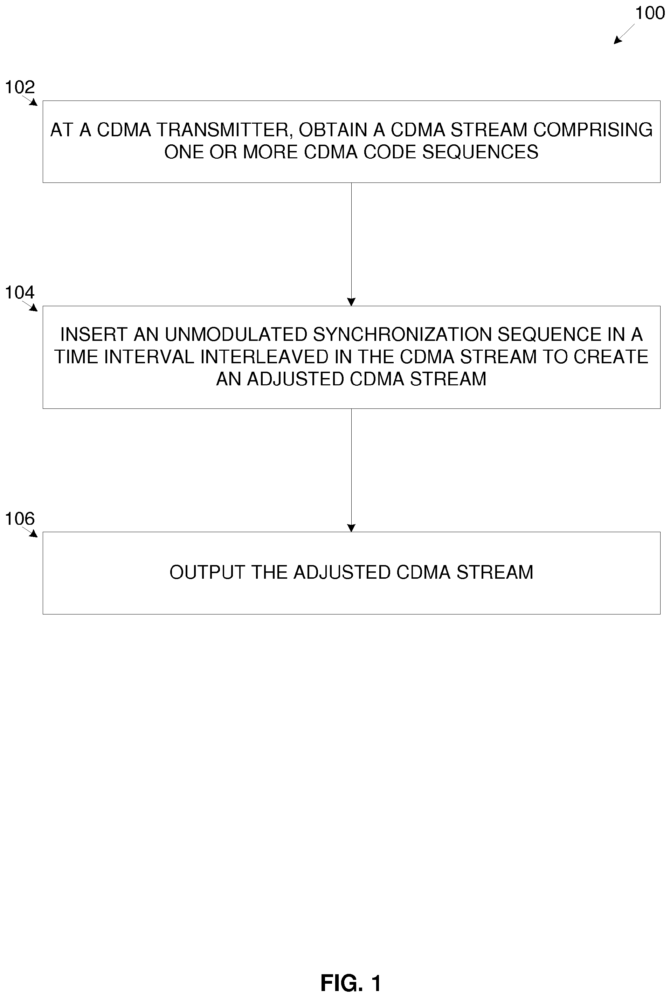

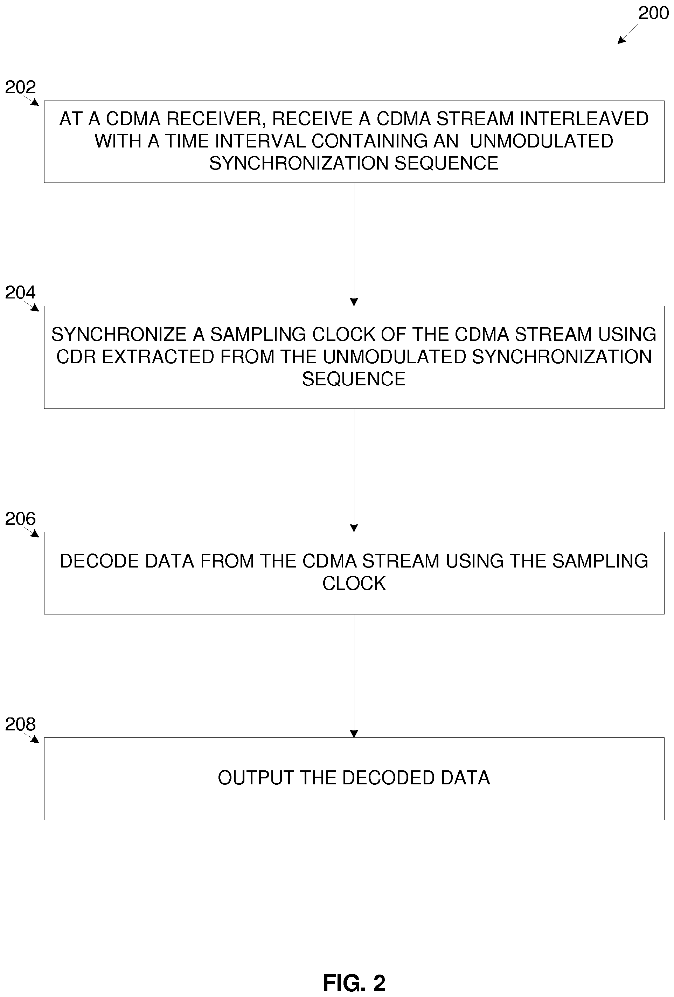

Referring now to the drawings, FIG. 1 is a flowchart of an exemplary process of time interleaving an unmodulated synchronization sequence in a CDMA stream, according to some embodiments of the present invention. FIG. 2 is a flowchart of an exemplary process of extracting data from a CDMA stream decoded using an unmodulated synchronization sequence for improved CDR, according to some embodiments of the present invention.

An exemplary process 100 may be executed by a CDMA transmitter for generating an adjusted CDMA stream by inserting an unmodulated (not modulated) synchronization sequence in one or more time intervals which are time interleaved in a CDMA stream comprising one or more CDMA sequences. The unmodulated synchronization sequence which is based on a a Barker having an autocorrelation presenting a substantially linear deviation error with respect to a delay offset of the unmodulated synchronization sequence.

An exemplary process 200 may be executed by one or more CDMA receivers using the interleaved unmodulated synchronization sequence to significantly improve Clock and Data Recovery (CDR) for synchronizing their (the receivers') sampling clock to the clock of the CDMA transmitter and use the sampling clock for decoding the (adjusted) CDMA stream to extract the encoded data.

Using the unmodulated synchronization sequence, one or more operational parameters of the CDR may be significantly improved, for example, convergence of the receiver(s)'s sampling clock with the transmitter clock may be expedited to significantly reduce communication latency, robustness of the transmission against interference may be significantly increased and/or the like.

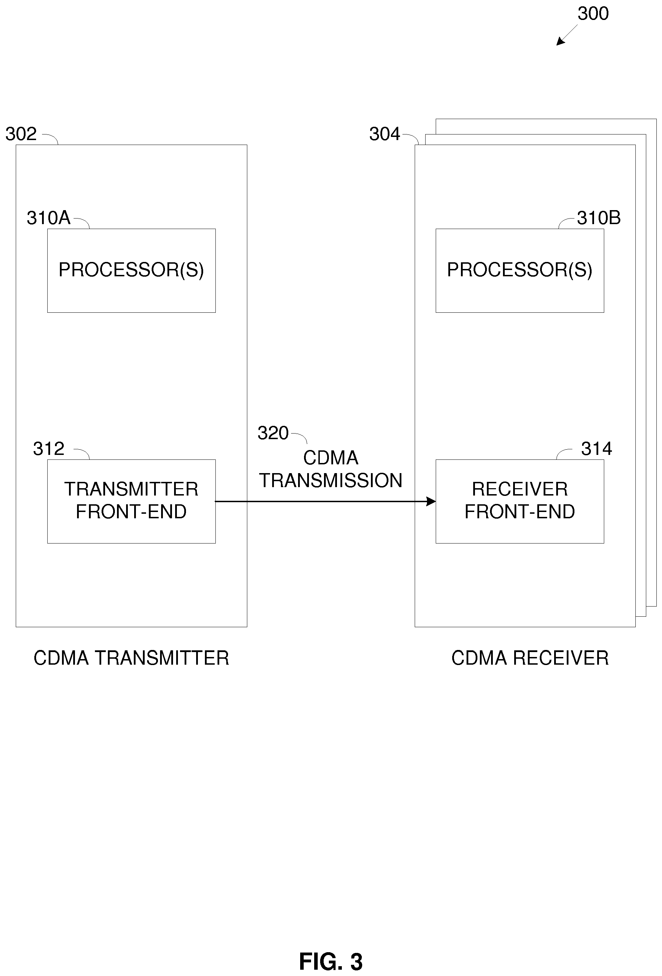

Reference is also made to FIG. 3, which is a schematic illustration of an exemplary CDMA transmitter transmitting a CDMA stream to an exemplary CDMA receiver, according to some embodiments of the present invention.

An exemplary CDMA transmitter 302 executing a process such as the process 100 for transmitting a CDMA transmission 320 may comprise a processor(s) 310A and a transmitter front-end 312.

The processor(s) 310A may include one or more processors (homogenous or heterogeneous), which may be arranged for parallel processing, as clusters and/or as one or more multi core processing units. The processor(s) 310A may execute program instructions from one or more non-transitory storage (program store) devices, for example, a volatile memory, a non-volatile memory, a hard drive and/or the like to manage the communication session(s). For example, the processor(s) 310A may execute program instructions for executing the process 100 for adjusting a CDMA stream comprising one or more CDMA sequences of data symbols by time interleaving one or more unmodulated synchronization sequences in the adjusted CDMA stream.

The transmitter front-end 312 may include one or more components, circuitries, and/or the like such as, for example, a modulator, a frequency spreader, an amplifier and/or the like as known in the art for processing the adjusted CDMA stream and transmitting the CDMA transmission 320.

An exemplary CDMA receiver 304 executing a process such as the process 200 may comprise a processor(s) 310B and a receiver front-end 314.

The processor(s) 310B may include one or more processors (homogenous or heterogeneous), which may be arranged for parallel processing, as clusters and/or as one or more multi core processing units. The processor(s) 310B may execute program instructions from one or more non-transitory storage (program store) devices, for example, a volatile memory, a non-volatile memory, a hard drive and/or the like to manage the communication session(s). For example, the processor(s) 310B may execute program instructions for executing the process 200 for decoding the CDMA stream received in the CDMA transmission 320 from the CDMA transmitter 302. The processor(s) 310B may decode the received CDMA stream using a sampling clock synchronized to the clock of the CDMA transmitter 302 based on CDR extracted using the unmodulated synchronization sequence(s) which are time interleaved in the received CDMA stream.

The receiver front-end 314 may include one or more components, circuitries, and/or the like such as, for example, an amplifier, a frequency de-spreader, a de-modulator and/or the like as known in the art for receiving and decoding the CDMA transmission 320.

As shown at 102, the process 100 starts with a CDMA transmitter such as the CDMA transmitter 302, in particular a processor(s) such as the processor(s) 310A, obtaining a CDMA stream comprising one or more CDMA sequences. Each of the CDMA sequences modulated in the CDMA stream comprises a plurality of channels each assigned a respective one of a plurality of codes and comprises data, for example, Hadamard code(s) converted to symbols using the respective code.

For example, the processor(s) 310A may receive the CDMA stream from a CDMA encoder of the CDMA transmitter 302. In another example, the processor(s) 310A may retrieve the CDMA stream from one or more storage devices, either volatile and/or non-volatile of the CDMA transmitter 302. In another example, the processor(s) 310A may receive the CDMA stream from one or more CDMA encoders external to the CDMA transmitter 302 which are operatively connected to the CDMA transmitter 302 through one or more communication channels, interconnections (e.g. a bus, a fabric, etc.).

As shown at 104, the processor(s) 310A adjusts the obtained CDMA stream by time interleaving, i.e. inserting, within the obtained CDMA stream one or more time intervals each comprising an unmodulated (not modulated) synchronization sequence. The processor(s) 310A inserts the unmodulated synchronization sequence(s) into the CDMA stream in the time domain as done for example, in Time Division Multiple Access (TDMA) encoding such that the unmodulated synchronization sequence(s) is assigned a time slot different and separate from the time slot assigned to the sequences of the obtained CDMA stream comprising the channels' data symbols. The unmodulated synchronization sequence(s) are not CDMA modulated such that they are not encoded with a certain code as done for each of the channels in the CDMA sequences of the CDMA stream. Moreover, the unmodulated synchronization sequence(s) is not spread over the frequency spectrum assigned to the CDMA stream but rather occupies the entire frequency spectrum of the CDMA stream.

The processor(s) 310A construct the unmodulated synchronization sequence based on a code pattern having a unique autocorrelation function which presents a substantially linear deviation error with respect to a delay offset of the unmodulated synchronization sequence. The used code pattern is the Barker code (Barker sequence) which presents an ideal autocorrelation property and is therefore in common use for a plurality of communication protocols as known in the art.

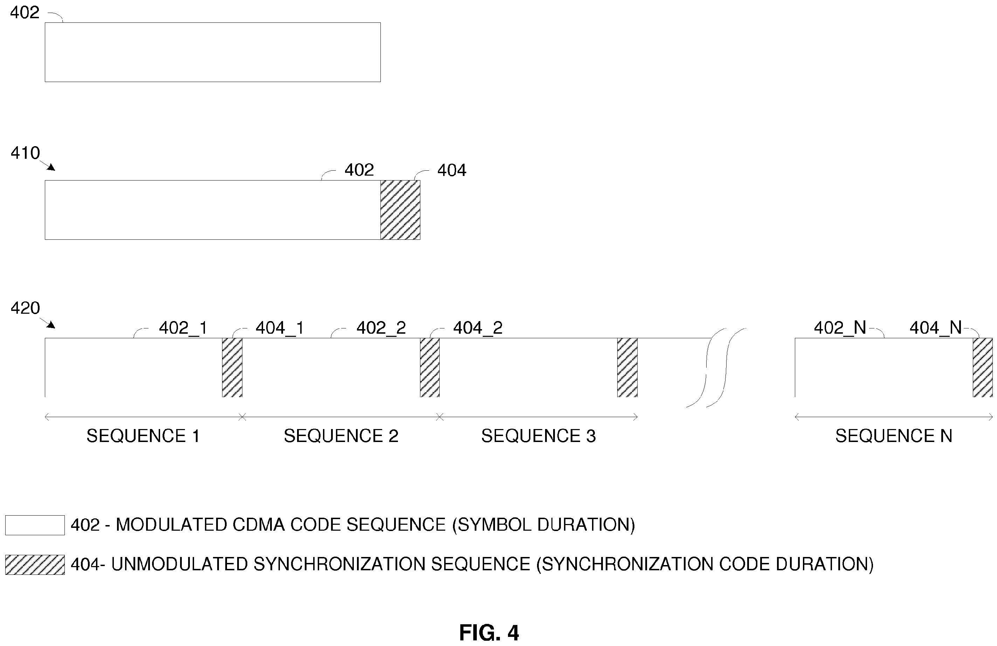

Reference is now made to FIG. 4, which is a schematic illustration of an exemplary CDMA stream interleaved with an unmodulated synchronization sequence, according to some embodiments of the present invention. A modulated CDMA stream (sequence) 402 is obtained by a processor(s) such as the processor(s) 310A as described in step 102. The CDMA sequence 402 includes data symbols of a plurality of channels each directed to a certain one of a plurality of CDMA receivers such as the CDMA receiver 304 receiving the a CDMA transmission such as the CDMA transmission 320. According to the CDMA protocol, the data of each channel is encoded using a respective one of the plurality of codes assigned to the channel. The processor(s) 310A constructs an adjusted CDMA stream 410 by adding to the obtained CDMA sequence 402 a time interval containing an unmodulated synchronization sequence 404 created (constructed) based on the Barker code as described in step 104. As such the adjusted CDMA stream 410 is multiplexed in the time domain such that the CDMA sequence 402 is assigned a time slot, for example, a time slot of 32 pulse periods (chips) and the time interval 404 is assigned a separate time slot, for example, a time slot of 5 pulse periods (chips).

Moreover, the CDMA stream 402 typically comprises a plurality of CDMA sequences 410 each encoding another data item for transmission to the CDMA receivers 304. The processor(s) 310A may therefore construct an adjusted CDMA stream 420 comprising a plurality of CDMA sequences 402, for example, CDMA sequences 402_1 through 402_N and insert, i.e. time interleave one or more time intervals 404, for example, time intervals 404_1 through 404_N into the CDMA stream each containing the unmodulated synchronization sequence.

Reference is made once again to FIG. 1 and FIG. 2.

As shown at 106, the processor(s) 310A may output the adjusted CDMA stream 420. For example, the processor(s) 310A may drive the adjusted CDMA stream 420 to the transmitter front-end 312 which may process the adjusted CDMA stream 420 and transmit a corresponding CDMA transmission 320.

One or more CDMA receivers 304 receiving the CDMA transmission 320 may use the unmodulated synchronization sequence 404 embedded in the adjusted CDMA stream 420 carried by the CDMA transmission 320 for CDR in order to synchronize their local sampling clock with the clock of the CDMA transmitter 302.

In some embodiments of the present invention, a certain unmodulated synchronization sequence 404 embedded in the adjusted CDMA stream 420 may be used by a plurality of CDMA receivers 304 for CDR in order to synchronize their local sampling clock with the clock of the CDMA transmitter 302. This means that multiple CDMA receivers 304 may use the same unmodulated synchronization sequence 404 for CDR.

As shown at 202, the processor(s) 310B may receive the adjusted CDMA stream from the receiver front-end 314 which is adapted to receive the CDMA transmission 320 from the CDMA transmitter 302 and extract the adjusted CDMA stream 420 comprising the CDMA sequence(s) 402 and the time interval(s) 404 containing the unmodulated synchronization sequence.

As shown at 204, the processor(s) 310B may synchronize a sampling clock of the CDMA receiver 304 to the clock of the CDMA transmitter 302 based on CDR extracted using the unmodulated synchronization sequence(s) 404 interleaved in the adjusted CDMA stream or 420.

The CDMA receiver 304 and/or the processor(s) 310B may apply one or more hardware and/or software implementations for synchronizing the sampling clock. For example, the processor(s) 310B may use early and late correlators for synchronizing the sampling clock as known in the art, for example, a Phase Lock Loops (PLL), a Delay Lock Loops (DLL) and/or the like.

The autocorrelation and spectral properties of the unmodulated synchronization sequence 404, namely the Barker code, may be highly effective for the CDR using the PLL since due to the low cross correlation, the unmodulated synchronization sequence 404 may be highly immune to interference.

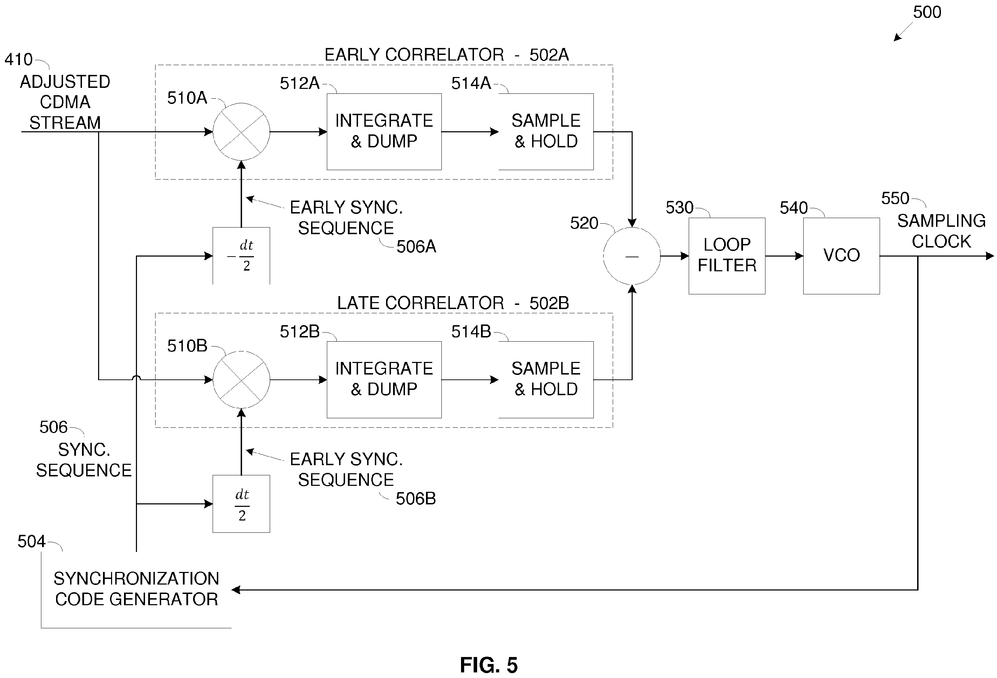

Reference is now made to FIG. 5, which is a block diagram of an exemplary receiver process of synchronizing a sampling clock for a received CDMA stream using an unmodulated synchronization sequence which is time interleaved in the CDMA stream, according to some embodiments of the present invention. A CDMA receiver such as the CDMA receiver 304 may implement one or more PLL circuits and/or software module(s) for recovering a sampling clock (CDR) from an adjusted CDMA stream such as the adjusted CDMA stream or 420 extracted from a CDMA transmission such as the CDMA transmission 320 received from a CDMA transmitter such as the CDMA transmitter 302.

Each PLL may comprise two correlators 502, an early correlator 502A and a late correlator 502B. Each of the correlators employs a similar construction and includes a multiplier 510, an integrate & dump filter 512 and a sample & hold function and/or circuit 514. Specifically, the early correlator 502A comprises a multiplier 510A, an integrate & dump filter 512A and a sample & hold function and/or circuit 514A. Similarly, the late correlator 502B comprises a multiplier 510B, an integrate & dump filter 512B and a sample & hold function and/or circuit 514B.

Each of the correlators 502A and 502B is driven with a locally generated unmodulated synchronization sequence 506 such as the unmodulated synchronization sequence 402 included in an adjusted CDMA stream such as the adjusted CDMA stream 420 extracted from a CDMA transmission such as the CDMA transmission 320.

The unmodulated synchronization sequence 506 is locally generated by a synchronization code generator 504 which generates the unmodulated synchronization sequence 506 using the same code pattern as used by the CDMA transmitter 302, namely, the Barker code for creating the unmodulated synchronization sequence 402. Moreover, the synchronization code generator 504 constructs the unmodulated synchronization sequence 506 to have the same time interval (duration) as the unmodulated synchronization sequence 402.

The early correlator 502A is driven with an early unmodulated synchronization sequence version 506A of the locally generated synchronization sequence 506 having a left shifted phase (-180 degrees phase shift) with respect to a sampling clock 550 of the CDMA receiver 304. The late correlator 502B on the other hand is driven with a late unmodulated synchronization sequence version 506B of the locally generated synchronization sequence 506 having a right shifted phase (180 degrees phase shift) with respect to the sampling clock 550.

The adjusted CDMA stream 410 is driven into the two multipliers 510 and the outcome of each multiplier 510 goes into the respective integrate & dump filter 512. Specifically, the outcome (output) of the multiplier 510A multiplying the adjusted CDMA stream 410 with the early unmodulated synchronization sequence 506A is driven to the integrate & dump filter 512A and the outcome (output) of the multiplier 510B multiplying the adjusted CDMA stream 410 with the late unmodulated synchronization sequence 506B is driven to the integrate & dump filter 512B.

The multipliers 510 may operate during the time slot (time duration) of the adjusted CDMA stream 410 containing the unmodulated synchronization sequence 402. The outcome of the multipliers 510 after going through the integrate & dump filters 512 is therefore sampled and held by the sample & hold functions 514 until a subsequent unmodulated synchronization sequence 402 is detected in the received adjusted CDMA stream 410. At detection of the subsequent unmodulated synchronization sequence 402 it is again processed by the correlators 502 and the output is again held in the sample & hold functions 514 until detection and processing of the next subsequent unmodulated synchronization sequence 402 in the received adjusted CDMA stream 410. Specifically, the outcome (output) of the integrate & dump filter 512A (early correlator 502A) is sampled and held by the sample & hold function 514A while the outcome (output) of the integrate & dump filter 512B (late correlator 502B) is sampled and held by the sample & hold function 514B.

The output of the early correlator 502A and the output of the late correlator 502B, specifically the output of the sample & hold functions 514A and 514B respectively are aggregated 520, for example, joined, subtracted and/or the like to produce an aggregated signal used, for example, by a loop filter 530 to control a Voltage Control Oscillator (540) which generates the sampling clock 550 used at the CDMA receiver 304 for decoding the received adjusted CDMA stream 410.

The sampling clock 550 is also fed back to the synchronization code generator 504 which in turn generates the locally generated unmodulated synchronization sequences 506 from which the early unmodulated synchronization sequence 506A and the late unmodulated synchronization sequence 506B are derived. Due to the feedback loop of the sampling clock 550 to the synchronization code generator 504, the aggregated product of the early and late correlators 502A and 502B gradually converges and the VCO controlled by this aggregated product therefore locks with the clock of the unmodulated synchronization sequences 402. As such the sampling clock 550 synchronizes with the clock used to generate the unmodulated synchronization sequences 402, i.e. the clock of the CDMA transmitter 302.

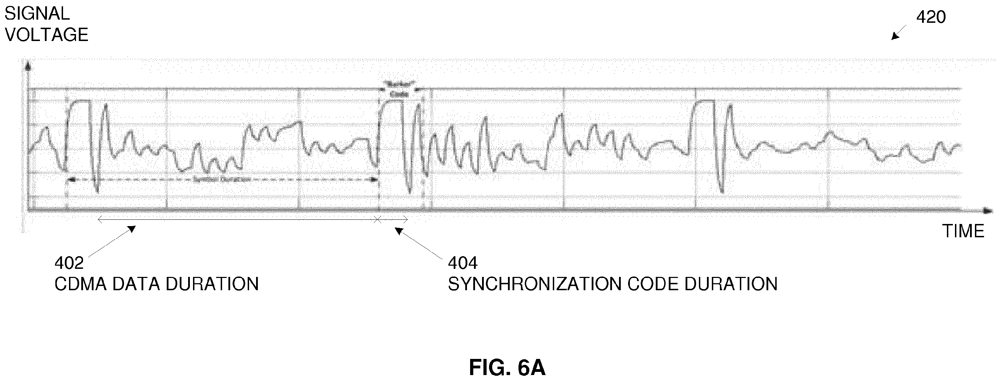

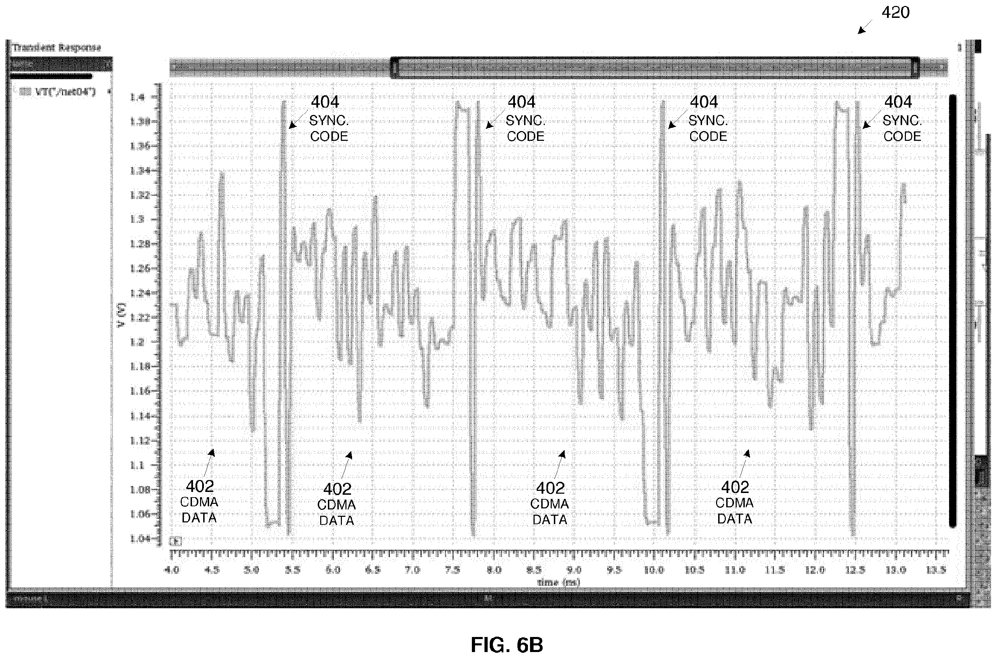

Reference is made once again to FIG. 6A and FIG. 6B, which are waveforms of exemplary simulated CDMA streams interleaved with an unmodulated synchronization sequence, according to some embodiments of the present invention. FIG. 6A presents a simulated waveform of an exemplary adjusted CDMA stream such as the adjusted CDMA stream 420 received at a CDMA receiver such as the CDMA receiver 304. The adjusted CDMA stream 420 is multiplexed in the time domain such that each CDMA sequence 402 is assigned a time slot, for example, a time slot of 32 pulse periods (chips) and each time interval containing the unmodulated synchronization sequence 404, namely, the Barker code is assigned a separate time slot, for example, a time slot of 5 pulse periods (chips).

FIG. 6B presents another waveform of the exemplary adjusted CDMA 420 received at the CDMA receiver 304 simulated in the analog domain. As described for FIG. 6A, the time slots of the CDMA sequence(s) 402 and the time slots of the unmodulated synchronization sequence 404 are clearly evident in the simulated waveform.

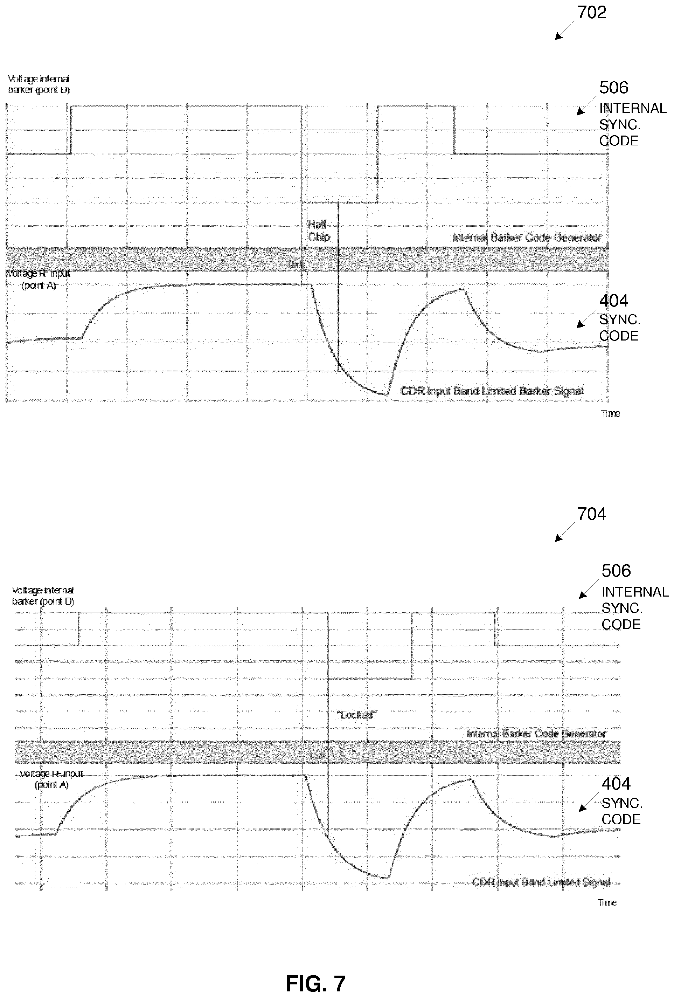

Reference is made once again to FIG. 7, which presents waveforms of exemplary unmodulated synchronization sequence time interleaved in a received CDMA stream and unmodulated synchronization sequence locally generated in a CDMA receiver during a locking sequence, according to some embodiments of the present invention. Captures 702 and 704 present waveforms of a locally generated unmodulated synchronization sequence such as the unmodulated synchronization sequence 506, for example, the late unmodulated synchronization sequence 506B and an unmodulated synchronization sequence 404 extracted from a CDMA stream such as the CDMA stream 420 received from a CDMA transmitter such as the CDMA transmitter 302.

As described herein before, the locally generated unmodulated synchronization sequence 506B is generated by a synchronization code generator such as the synchronization code generator 504 using a sampling clock such as the sampling clock 550 while the received unmodulated synchronization sequence 404 is generated by the CDMA transmitter 302.

The capture 702 presents the waveforms before the two unmodulated synchronization sequences 506B and 404 are locked, for example, in an initial phase of the reception of the CDMA stream 410. The worst case scenario may be when the locally generated unmodulated synchronization sequences 506B lags or leads by half pulse duration (chip) with respect to the received unmodulated synchronization sequence 404 as shown in the capture 702.

Applying the early and late correlators 502A and 502B may lead the sampling clock 550 to gradually lock (synchronize) to the clock used by the CDMA transmitter 302 to generate the unmodulated synchronization sequences 404 until the sampling clock 550 locks to clock of the CDMA transmitter 302.

The capture 604 presents the waveforms after the sampling clock 550 locks to clock of the CDMA transmitter 302 and the two unmodulated synchronization sequences 506B and 404 are locked (synchronized) with each other.

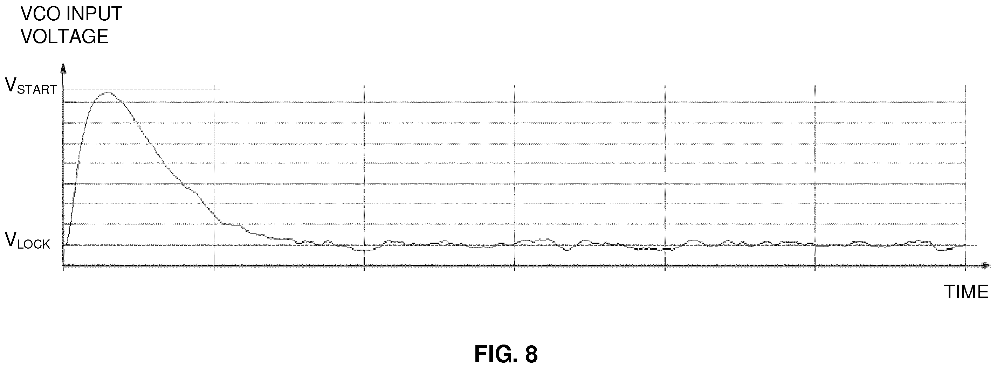

Reference is now made to FIG. 8, which is a graph chart of a voltage input to a VCO such as the VCO 540 of an exemplary CDMA receiver such as the CDMA receiver 304 during a CDR lock, according to some embodiments of the present invention. The graph chart shows the convergence of the time phase between the CDMA receiver 304 and a CDMA transmitter such as the CDMA transmitter 302. Initially at the start of the CDR sequence, there may be a significant phase difference between a sampling clock of the CDMA receiver 304 such as the sampling clock 550 and the clock of the CDMA transmitter 302 (embedded in the CDMA stream 420). As result, the difference between the outputs of early and late correlators such as the early and late correlators 502 is significantly large. The aggregated result of the early and late correlators 502 such as the aggregated result 520 may therefore also be significantly large leading to a high voltage at the input of the VCO 540 is significantly high - V_{START}. However, as the CDR sequence advances the input to the VCO 540 converges to a steady state as the sampling clock 550 converges with the clock of the CDMA transmitter 302 embedded in the CDMA stream 420. This is an inherent property of the early and late correlators 502 implementation, where the higher the input to the VCO 540 the higher the frequency of the sampling clock 550 and vice versa. Depending on the phase difference between the sampling clock 550 and the clock of the CDMA transmitter 302, the frequency of the sampling lock may be increased or decreased thus the early correlator 502A and the late correlator 502A respectively may detect more energy than the other correlator. This process is continued while gradually both the early and late correlators 502 detect the same energy and the aggregated result 520 reaches the steady state point where a resulting input voltage V_{LOCK} to the VCO 540 produces a sampling clock 550 synchronized with the clock of the CDMA transmitter 302 embedded in the CDMA stream 420.

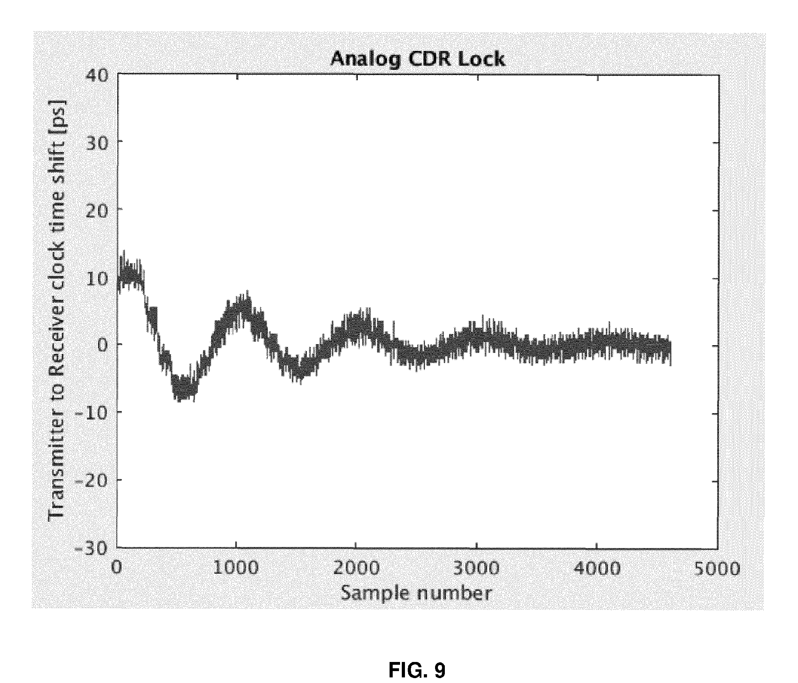

Reference is now made to FIG. 9, which is a graph chart presenting a time shift between a clock of an exemplary CDMA transmitter such as the CDMA transmitter 302 and a sampling clock of an exemplary CDMA receiver such as the CDMA receiver 304 during a CDR lock, according to some embodiments of the present invention. Applying early-late correlators such as the early-late correlators 502 as described in FIG. 8 may significantly increase a convergence rate of a sampling clock such as the sampling clock 550 of the CDMA receiver 304 to the clock of the CDMA transmitter 302. FIG. 9 presents a simulation of the exemplary CDMA stream 410 in which the CDMA sequence 402 is assigned a time slot of 32 pulse periods (chips) and the unmodulated synchronization sequence 404 (i.e. the Barker code) is assigned a time slot of 5 pulse periods (chips). As evident, the sampling clock 550 may rapidly converge with the clock of the CDMA transmitter 302 (embedded in the CDMA stream 420) within ~400 samples of the CDMA stream 420.

Reference is made once again to FIG. 2.

As shown at 206, the processor(s) 310B may use the synchronized sampling clock to decode the adjusted CDMA stream 420, in particular the CDMA sequence(s) 402 encoded with the code(s) assigned to the specific CDMA receiver 304 as known in the art.

As shown at 208, the processor(s) 310B may output the data decoded from the CDMA sequence(s) 402.

As known in the art, CDMA is typically used by multi access communication infrastructures, systems, services, applications, deployments and/or the like in which information is simultaneously transmitted over a plurality of channels each assigned a different encoding code and spread over the frequency band (spectrum) of the CDMA transmission. For example, a cellular base station may apply CDMA transmission for communicating over a given Radio Frequency (RF) band with a plurality of User equipment (UE) devices each assigned a certain one of a plurality of codes of the CDMA scheme. In another example, a central office may apply CDMA transmission for communicating over a network medium, for example, an optic fiber with a plurality of virtual Access nodes (vAN) in a frequency band allocated to the CDMA transmission with each of the vANs assigned a certain one of a plurality of codes of the CDMA scheme.

The adjusted CDMA stream 420 comprising the time interleaved unmodulated synchronization sequence(s) 404 may be easily applied, implemented, adopted and/or deployed in such legacy CDMA infrastructures, systems, services, applications, deployments and/or the like.

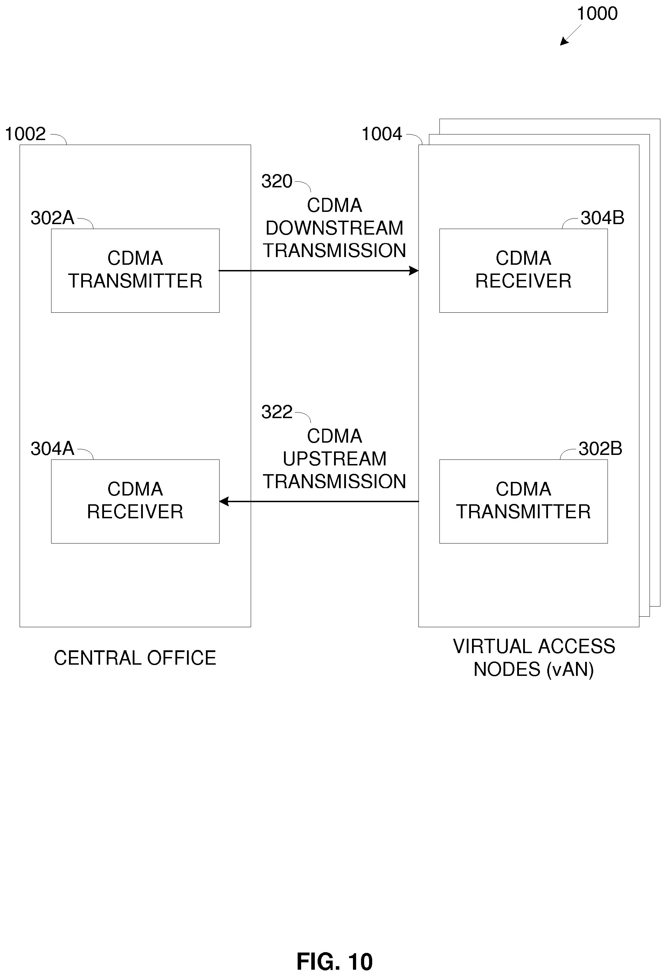

Reference is now made to FIG. 10, which is a schematic illustration of an exemplary deployment of a CDMA central office transmitting a CDMA stream time interleaved with unmodulated synchronization sequences to a plurality of CDMA nodes which use the unmodulated synchronization sequences for CDR, according to some embodiments of the present invention.

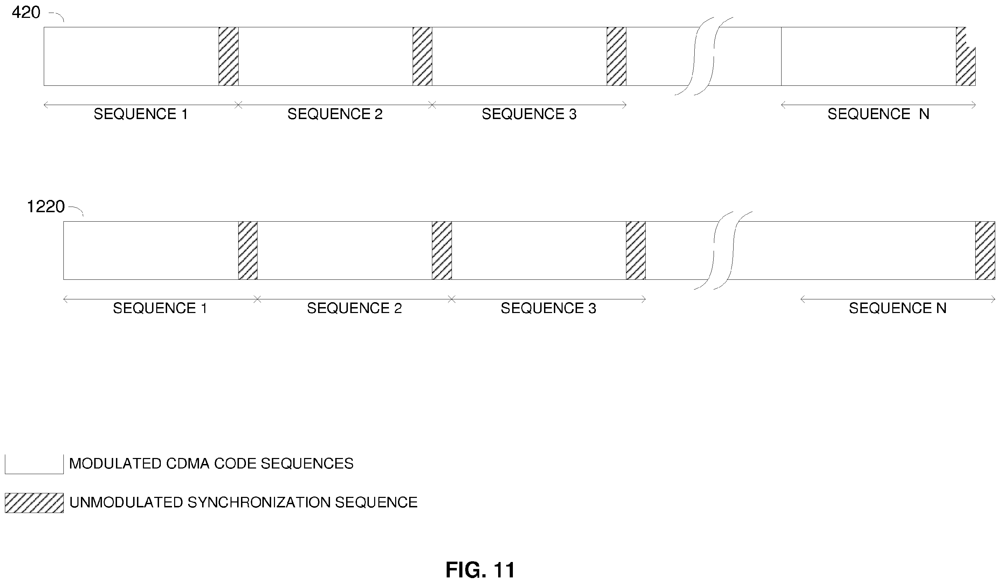

Reference is also made to FIG. 11, which is a schematic illustration of exemplary downstream and upstream CDMA streams time interleaved with unmodulated synchronization sequences exchanged between a CDMA central office and a plurality of CDMA, according to some embodiments of the present invention.

An exemplary central office apparatus 1002 comprising a CDMA transmitter 302A such as the CDMA transmitter 302 and a CDMA receiver 304A such as the CDMA receiver 304 may communicate via a wired or wireless communication medium with a plurality of vANs 1004 each comprising a CDMA transmitter 302B such as the CDMA transmitter 302 and a CDMA receiver 304B such as the CDMA receiver 304.

In particular, the central office 1002 applies the process 100 for transmitting a downstream CDMA transmission such as the CDMA transmission 320 comprising an adjusted CDMA stream such as the adjusted CDMA stream 420 comprising a plurality of channels each encoded with a respective one of a plurality of codes of the CDMA scheme. On the downstream side, each of the vANs 1004 is assigned a certain code of the plurality of codes of the CDMA scheme such that it may decode data received from the central office 1002 in the respective channel.

One or more of the vANs 1004, specifically the CDMA receiver 304B of the vAN(s) 1004 may execute the process 200 to decode the data encoded in its respective assigned channel by synchronizing its local sampling clock such as the sampling clock 550 to the clock of the CDMA transmitter 302A of the central office 1002 by recovering the clock from an unmodulated synchronization sequence such as the unmodulated synchronization sequence 404 interleaved in the adjusted CDMA stream 420.

On the upstream side, in order for the CDMA receiver 304A of the central office 1002 to decode the data received from the vANs 1004 via upstream CDMA transmissions 322, the vANs 1004, specifically the clock used by the CDMA transmitter 302B of the vANs 1004 must be synchronized to construct the upstream CDMA transmissions 322 using a common time base.

This may be easily achieved since the CDMA transmitters 302B of the vANs 1004 may also apply the process 100 for transmitting an upstream CDMA transmission comprising adjusted CDMA stream(s) such as the adjusted CDMA stream 410. Moreover, the CDMA transmitters 302B may encode their respective upstream CDMA channels using the sampling clock 550 originally extracted from the CDMA stream 420 received from the central office 1002.

As shown in FIG. 11, due to the latency between the downstream CDMA transmission 320 from the central office 1002 and the upstream CDMA transmissions 322 from the vANs 1004 there may be a time shift between the adjusted CDMA stream 420 included in the downstream CDMA transmission 320 and an adjusted CDMA stream 1220 included in the upstream CDMA transmission 322. However, since the CDMA transmitters 302B of the vANs 1004 all use the common time base recovered from the adjusted CDMA stream 420, the timing of the channels received from the plurality of vANs 1004 to compose the upstream CDMA sequences 1 through N is also synchronized. The CDMA receiver 304A of the central office 1002 may therefore be able to decode the data encoded in the adjusted CDMA sequences of the adjusted CDMA stream 1220 received in the upstream CDMA transmission 322.

It is expected that during the life of a patent maturing from this application many relevant systems, methods and computer programs will be developed and the scope of the term code pattern having a unique autocorrelation function presenting a substantially linear deviation error with respect to the a delay offset is intended to include all such new technologies a priori.

As used herein the term "about" refers to ± 10 %.

The terms "comprises", "comprising", "includes", "including", "having" and their conjugates mean "including but not limited to".

The term "consisting of" means "including and limited to".

As used herein, the singular form "a", "an" and "the" include plural references unless the context clearly dictates otherwise. For example, the term "a compound" or "at least one compound" may include a plurality of compounds, including mixtures thereof.

Throughout this application, various embodiments of this invention may be presented in a range format. It should be understood that the description in range format is merely for convenience and brevity and should not be construed as an inflexible limitation on the scope of the invention. Accordingly, the description of a range should be considered to have specifically disclosed all the possible subranges as well as individual numerical values within that range. For example, description of a range such as from 1 to 6 should be considered to have specifically disclosed subranges such as from 1 to 3, from 1 to 4, from 1 to 5, from 2 to 4, from 2 to 6, from 3 to 6 etc., as well as individual numbers within that range, for example, 1, 2, 3, 4, 5, and 6. This applies regardless of the breadth of the range.

Whenever a numerical range is indicated herein, it is meant to include any cited numeral (fractional or integral) within the indicated range. The phrases "ranging/ranges between" a first indicate number and a second indicate number and "ranging/ranges from" a first indicate number "to" a second indicate number are used herein interchangeably and are meant to include the first and second indicated numbers and all the fractional and integral numerals therebetween.

It is appreciated that certain features of the invention, which are, for clarity, described in the context of separate embodiments, may also be provided in combination in a single embodiment.

## Claims

1. A code division multiple access, CDMA, receiver, comprising:
a processor adapted to:
receive an adjusted CDMA stream comprising time intervals added in the CDMA stream such that the time intervals are assigned a separate time slot from a time slot of CDMA code sequences, wherein each of the time intervals contains an unmodulated synchronization sequence which is based on a code pattern having a unique autocorrelation function presenting a substantially linear deviation error with respect to a delay offset of the unmodulated synchronization sequence, wherein the code pattern is a Barker code, wherein each of the CDMA sequences modulated in the CDMA stream comprises a plurality of channels each assigned a respective one of a plurality of codes and comprises data, wherein the data of each of the CDMA code sequences is CDMA modulated spread over the frequency band or spectrum assigned to the CDMA transmission, wherein the unmodulated synchronization sequence is not CDMA modulated, wherein the unmodulated synchronization sequence is not encoded and not spread over the frequency band or spectrum assigned to the CDMA transmission, and wherein the unmodulated synchronization sequence occupies the entire frequency band of the CDMA;
synchronize a sampling clock of the CDMA stream using clock and data recovery, CDR, extracted from the adjusted CDMA stream using the unmodulated synchronization sequence;
decode data of the plurality of channels of the CDMA stream using the synchronized sampling clock; and
output the data decoded from the plurality of channels;
wherein the CDR is extracted using a locking mechanism comprising an early correlator and a late correlator, wherein:
the early correlator comprising:
a multiplier for multiplying the received unmodulated synchronization sequence with an early synchronization sequence generated based on the code pattern and having an early half code pulse timing,
an integrate and dump filter receiving an output of the multiplier, and
a sample and hold function receiving an output of the filter,
and
the late correlator comprising:
a multiplier for multiplying the received unmodulated synchronization sequence with a late synchronization sequence generated based on the code pattern and having a late half code pulse timing,
an integrate and dump filter receiving an output of the multiplier, and
a sample and hold function receiving an output of the filter;
wherein the output of the sample and hold function of the early correlator and the late correlator are joined to control a clock generator driving a clock used:
by the early correlator and by the late correlator for sampling the CDMA stream, and
by at least one signal generator as a reference clock for generating the early synchronization sequence and the late synchronization sequence; and
wherein the sample and hold function is operated only during the time interval of the unmodulated synchronization sequence in the received CDMA code sequence such that the sample and hold function holds the output of the filter until a new synchronization sequence is detected.

2. A method of decoding data of at least one channel of a received code division multiple access, CDMA, stream based on a sampling clock synchronized according to an unmodulated synchronization sequence interleaved with the CDMA stream, comprising:
using a processor of a receiver, the processor is adapted for:
receiving an adjusted CDMA stream comprising time intervals added to the CDMA stream such that the time intervals are assigned a separate time slot from a time slot of CDMA code sequences, wherein each of the time intervals contains an unmodulated synchronization sequence which is based on a code pattern having a unique autocorrelation function presenting a substantially linear deviation error with respect to a delay offset of the unmodulated synchronization sequence, wherein the code pattern is a Barker code, wherein each of the CDMA sequences modulated in the CDMA stream comprises a plurality of channels each assigned a respective one of a plurality of codes and comprises data, wherein the data of each of the CDMA code sequences is CDMA modulated spread over the frequency band or spectrum assigned to the CDMA transmission, wherein the unmodulated synchronization sequence is not CDMA modulated, wherein the unmodulated synchronization sequence is not encoded and not spread over the frequency band or spectrum assigned to the CDMA transmission, and wherein the unmodulated synchronization sequence occupies the entire frequency band of the CDMA;
synchronizing a sampling clock of the CDMA stream using clock and data recovery, CDR, extracted from the adjusted CDMA stream using the unmodulated synchronization sequence;
decoding data of the plurality of channels of the CDMA stream using the synchronized sampling clock; and
outputting the data decoded from the plurality of channels;
wherein the CDR is extracted using a locking mechanism comprising an early correlator and a late correlator, wherein:
the early correlator comprising:
a multiplier for multiplying the received unmodulated synchronization sequence with an early synchronization sequence generated based on the code pattern and having an early half code pulse timing,
an integrate and dump filter receiving an output of the multiplier, and
a sample and hold function receiving an output of the filter,
and
the late correlator comprising:
a multiplier for multiplying the received unmodulated synchronization sequence with a late synchronization sequence generated based on the code pattern and having a late half code pulse timing,
an integrate and dump filter receiving an output of the multiplier, and
a sample and hold function receiving an output of the filter;
wherein the output of the sample and hold function of the early correlator and the late correlator are joined to control a clock generator driving a clock used:
by the early correlator and by the late correlator for sampling the CDMA stream, and
by at least one signal generator as a reference clock for generating the early synchronization sequence and the late synchronization sequence; and
wherein the sample and hold function is operated only during the time interval of the unmodulated synchronization sequence in the received CDMA code sequence such that the sample and hold function holds the output of the filter until a new synchronization sequence is detected.

## Patentansprüche

1. Code Division Multiple Access(Codemultiplexverfahren, CDMA)-Empfänger, umfassend:
einen Prozessor, der zu Folgendem angepasst ist:
Empfangen eines eingestellten CDMA-Stroms, umfassend Zeitintervalle, die in dem CDMA-Strom derart hinzugefügt werden, dass die Zeitintervalle einem separaten Zeitschlitz von einem Zeitschlitz von CDMA-Codesequenzen zugewiesen werden, wobei jedes der Zeitintervalle eine unmodulierte Synchronisationssequenz enthält, die auf einem Codemuster basiert, das eine eindeutige Autokorrelationsfunktion aufweist, die einen im Wesentlichen linearen Abweichungsfehler in Bezug auf einen Verzögerungsversatz der unmodulierten Synchronisationssequenz präsentiert, wobei das Codemuster ein Barker-Code ist, wobei jede der in dem CDMA-Strom modulierten CDMA-Sequenzen eine Vielzahl von Kanälen umfasst, denen jeweils einer aus einer Vielzahl von Codes zugewiesen ist, und Daten umfasst, wobei die Daten jeder der CDMA-Codesequenzen CDMA-moduliert über das der CDMA-Übertragung zugewiesene Frequenzband oder Spektrum verteilt sind, wobei die unmodulierte Synchronisationssequenz nicht CDMA-moduliert ist, wobei die unmodulierte Synchronisationssequenz nicht codiert und nicht über das der CDMA-Übertragung zugewiesene Frequenzband oder Spektrum verteilt ist, und wobei die unmodulierte Synchronisationssequenz das gesamte Frequenzband des CDMA belegt;
Synchronisieren eines Abtasttakts des CDMA-Stroms unter Verwendung von Takt- und Datenwiederherstellung (clock and data recovery, CDR), extrahiert aus dem eingestellten CDMA-Strom unter Verwendung der unmodulierten Synchronisationssequenz;
Decodieren von Daten der Vielzahl von Kanälen des CDMA-Stroms unter Verwendung des synchronisierten Abtasttakts; und
Ausgeben der aus der Vielzahl von Kanälen decodierten Daten;
wobei die CDR unter Verwendung eines Sperrmechanismus extrahiert wird, umfassend einen frühen Korrelator und einen späten Korrelator, wobei:
der frühe Korrelator Folgendes umfasst:
einen Multiplizierer zum Multiplizieren der empfangenen unmodulierten Synchronisationssequenz mit einer frühen Synchronisationssequenz, die basierend auf dem Codemuster generiert wird und ein frühes Halbcodeimpulstiming aufweist,
einen Integrier- und Dump-Filter, der eine Ausgabe des Multiplizierers empfängt, und
eine Abtast- und Haltefunktion, die eine Ausgabe des Filters empfängt,
und
der späte Korrelator Folgendes umfasst:
einen Multiplizierer zum Multiplizieren der empfangenen unmodulierten Synchronisationssequenz mit einer späten Synchronisationssequenz, die basierend auf dem Codemuster generiert wird und ein spätes Halbcodeimpulstiming aufweist,
einen Integrier- und Dump-Filter, der eine Ausgabe des Multiplizierers empfängt, und
eine Abtast- und Haltefunktion, die eine Ausgabe des Filters empfängt;
wobei die Ausgabe der Abtast- und Haltefunktion des frühen Korrelators und des späten Korrelators verbunden werden, um einen Taktgenerator zu steuern, der einen Takt ansteuert, verwendet:
durch den frühen Korrelator und durch den späten Korrelator zum Abtasten des CDMA-Stroms und
durch mindestens einen Signalgenerator als Referenztakt zum Generieren der frühen Synchronisationssequenz und der späten Synchronisationssequenz; und
wobei die Abtast- und Haltefunktion nur während des Zeitintervalls der unmodulierten Synchronisationssequenz in der empfangenen CDMA-Codesequenz betrieben wird, derart, dass die Abtast- und Haltefunktion die Ausgabe des Filters hält, bis eine neue Synchronisationssequenz erkannt wird.

2. Verfahren zum Decodieren von Daten von mindestens einem Kanal eines empfangenen Code Division Multiple Access(CDMA)-Stroms, basierend auf einem Abtasttakt, der gemäß einer unmodulierten Synchronisationssequenz synchronisiert ist, die mit dem CDMA-Strom verschachtelt ist, umfassend:
Verwenden eines Prozessors eines Empfängers, wobei der Prozessor zu Folgendem angepasst ist:
Empfangen eines eingestellten CDMA-Stroms, umfassend Zeitintervalle, die dem CDMA-Strom derart hinzugefügt werden, dass die Zeitintervalle einem separaten Zeitschlitz von einem Zeitschlitz von CDMA-Codesequenzen zugewiesen werden, wobei jedes der Zeitintervalle eine unmodulierte Synchronisationssequenz enthält, die auf einem Codemuster basiert, das eine eindeutige Autokorrelationsfunktion aufweist, die einen im Wesentlichen linearen Abweichungsfehler in Bezug auf einen Verzögerungsversatz der unmodulierten Synchronisationssequenz präsentiert, wobei das Codemuster ein Barker-Code ist, wobei jede der in dem CDMA-Strom modulierten CDMA-Sequenzen eine Vielzahl von Kanälen umfasst, denen jeweils einer aus einer Vielzahl von Codes zugewiesen ist, und Daten umfasst, wobei die Daten jeder der CDMA-Codesequenzen CDMA-moduliert über das der CDMA-Übertragung zugewiesene Frequenzband oder Spektrum verteilt sind, wobei die unmodulierte Synchronisationssequenz nicht CDMA-moduliert ist, wobei die unmodulierte Synchronisationssequenz nicht codiert und nicht über das der CDMA-Übertragung zugewiesene Frequenzband oder Spektrum verteilt ist, und wobei die unmodulierte Synchronisationssequenz das gesamte Frequenzband des CDMA belegt;
Synchronisieren eines Abtasttakts des CDMA-Stroms unter Verwendung von Takt- und Datenwiederherstellung, CDR, extrahiert aus dem eingestellten CDMA-Strom unter Verwendung der unmodulierten Synchronisationssequenz;
Decodieren von Daten der Vielzahl von Kanälen des CDMA-Stroms unter Verwendung des synchronisierten Abtasttakts; und
Ausgeben der aus der Vielzahl von Kanälen decodierten Daten;
wobei die CDR unter Verwendung eines Sperrmechanismus extrahiert wird, umfassend einen frühen Korrelator und einen späten Korrelator, wobei:
der frühe Korrelator Folgendes umfasst:
einen Multiplizierer zum Multiplizieren der empfangenen unmodulierten Synchronisationssequenz mit einer frühen Synchronisationssequenz, die basierend auf dem Codemuster generiert wird und ein frühes Halbcodeimpulstiming aufweist,
einen Integrier- und Dump-Filter, der eine Ausgabe des Multiplizierers empfängt, und
eine Abtast- und Haltefunktion, die eine Ausgabe des Filters empfängt,
und
der späte Korrelator Folgendes umfasst:
einen Multiplizierer zum Multiplizieren der empfangenen unmodulierten Synchronisationssequenz mit einer späten Synchronisationssequenz, die basierend auf dem Codemuster generiert wird und ein spätes Halbcodeimpulstiming aufweist,
einen Integrier- und Dump-Filter, der eine Ausgabe des Multiplizierers empfängt, und
eine Abtast- und Haltefunktion, die eine Ausgabe des Filters empfängt;
wobei die Ausgabe der Abtast- und Haltefunktion des frühen Korrelators und des späten Korrelators verbunden werden, um einen Taktgenerator zu steuern, der einen Takt ansteuert, verwendet:
durch den frühen Korrelator und durch den späten Korrelator zum Abtasten des CDMA-Stroms, und
durch mindestens einen Signalgenerator als Referenztakt zum Generieren der frühen Synchronisationssequenz und der späten Synchronisationssequenz; und
wobei die Abtast- und Haltefunktion nur während des Zeitintervalls der unmodulierten Synchronisationssequenz in der empfangenen CDMA-Codesequenz betrieben wird, derart, dass die Abtast- und Haltefunktion die Ausgabe des Filters hält, bis eine neue Synchronisationssequenz erkannt wird.

## Revendications

1. Récepteur à accès multiple par répartition en code, CDMA, comprenant :
un processeur adapté pour :
recevoir un flux CDMA ajusté comprenant des intervalles de temps ajoutés dans le flux CDMA de sorte que les intervalles de temps se voient attribuer un intervalle de temps distinct d'un intervalle de temps de séquences de codes CDMA, dans lequel chacun des intervalles de temps contient une séquence de synchronisation non modulée qui est basée sur un modèle de code ayant une fonction d'autocorrélation unique présentant une erreur d'écart sensiblement linéaire par rapport à un décalage de retard de la séquence de synchronisation non modulée, dans lequel le modèle de code est un code de Barker, dans lequel chacune des séquences CDMA modulées dans le flux CDMA comprend une pluralité de canaux chacun attribué à un code respectif parmi une pluralité de codes et comprend des données, dans lequel les données de chacune des séquences de codes CDMA sont modulées par CDMA et sont étalées sur la bande de fréquence ou le spectre attribué à la transmission CDMA, dans lequel la séquence de synchronisation non modulée n'est pas modulée par CDMA, dans lequel la séquence de synchronisation non modulée n'est pas codée et n'est pas étalée sur la bande de fréquence ou le spectre attribué à la transmission CDMA, et dans lequel la séquence de synchronisation non modulée occupe toute la bande de fréquence du CDMA ;
synchroniser une horloge d'échantillonnage du flux CDMA à l'aide d'une récupération d'horloge et de données, CDR, extraite du flux CDMA ajusté à l'aide de la séquence de synchronisation non modulée ;
décoder les données de la pluralité de canaux du flux CDMA à l'aide de l'horloge d'échantillonnage synchronisée ; et
sortir les données décodées à partir de la pluralité de canaux ;
dans lequel le CDR est extrait à l'aide d'un mécanisme de verrouillage comprenant un corrélateur précoce et un corrélateur tardif, dans lequel :
le corrélateur précoce comprend :
un multiplicateur pour multiplier la séquence de synchronisation non modulée reçue avec une séquence de synchronisation précoce générée sur la base du modèle de code et ayant une synchronisation d'impulsion de demi-code précoce,
un filtre d'intégration et de vidage recevant une sortie du multiplicateur, et
une fonction d'échantillonnage et de maintien recevant une sortie du filtre,
et
le corrélateur tardif comprenant :
un multiplicateur pour multiplier la séquence de synchronisation non modulée reçue avec une séquence de synchronisation tardive générée sur la base du modèle de code et ayant une synchronisation d'impulsion de demi-code tardive,
un filtre d'intégration et de vidage recevant une sortie du multiplicateur, et
une fonction d'échantillonnage et de maintien recevant une sortie du filtre ;
dans lequel la sortie de la fonction d'échantillonnage et de maintien du corrélateur précoce et du corrélateur tardif sont jointes pour commander un générateur d'horloge pilotant une horloge utilisée :
par le corrélateur précoce et par le corrélateur tardif pour l'échantillonnage du flux CDMA, et
par au moins un générateur de signaux en tant qu'horloge de référence pour générer la séquence de synchronisation précoce et la séquence de synchronisation tardive ; et
dans lequel la fonction d'échantillonnage et de maintien est actionnée uniquement pendant l'intervalle de temps de la séquence de synchronisation non modulée dans la séquence de code CDMA reçue de sorte que la fonction d'échantillonnage et de maintien maintient la sortie du filtre jusqu'à ce qu'une nouvelle séquence de synchronisation soit détectée.

2. Procédé de décodage de données d'au moins un canal d'un flux d'accès multiple par répartition en code, CDMA, reçu sur la base d'une horloge d'échantillonnage synchronisée selon une séquence de synchronisation non modulée entrelacée avec le flux CDMA, comprenant :
l'utilisation d'un processeur d'un récepteur, le processeur est adapté pour :
recevoir un flux CDMA ajusté comprenant des intervalles de temps ajoutés dans le flux CDMA de sorte que les intervalles de temps se voient attribuer un intervalle de temps distinct d'un intervalle de temps de séquences de codes CDMA, dans lequel chacun des intervalles de temps contient une séquence de synchronisation non modulée qui est basée sur un modèle de code ayant une fonction d'autocorrélation unique présentant une erreur d'écart sensiblement linéaire par rapport à un décalage de retard de la séquence de synchronisation non modulée, dans lequel le modèle de code est un code de Barker, dans lequel chacune des séquences CDMA modulées dans le flux CDMA comprend une pluralité de canaux chacun attribué à un code respectif parmi une pluralité de codes et comprend des données, dans lequel les données de chacune des séquences de codes CDMA sont modulées par CDMA et sont étalées sur la bande de fréquence ou le spectre attribué à la transmission CDMA, dans lequel la séquence de synchronisation non modulée n'est pas modulée par CDMA, dans lequel la séquence de synchronisation non modulée n'est pas codée et n'est pas étalée sur la bande de fréquence ou le spectre attribué à la transmission CDMA, et dans lequel la séquence de synchronisation non modulée occupe toute la bande de fréquence du CDMA ;
la synchronisation d'une horloge d'échantillonnage du flux CDMA à l'aide d'une récupération d'horloge et de données, CDR,
extraite du flux CDMA ajusté à l'aide de la séquence de synchronisation non modulée ;
le décodage des données de la pluralité de canaux du flux CDMA à l'aide de l'horloge d'échantillonnage synchronisée ; et
la sortie des données décodées à partir de la pluralité de canaux ;
dans lequel le CDR est extrait à l'aide d'un mécanisme de verrouillage comprenant un corrélateur précoce et un corrélateur tardif, dans lequel :
le corrélateur précoce comprend :
un multiplicateur pour multiplier la séquence de synchronisation non modulée reçue avec une séquence de synchronisation précoce générée sur la base du modèle de code et ayant une synchronisation d'impulsion de demi-code précoce,
un filtre d'intégration et de vidage recevant une sortie du multiplicateur, et
une fonction d'échantillonnage et de maintien recevant une sortie du filtre,
et
le corrélateur tardif comprenant :
un multiplicateur pour multiplier la séquence de synchronisation non modulée reçue avec une séquence de synchronisation tardive générée sur la base du modèle de code et ayant une synchronisation d'impulsion de demi-code tardive,
un filtre d'intégration et de vidage recevant une sortie du multiplicateur, et
une fonction d'échantillonnage et de maintien recevant une sortie du filtre ;
dans lequel la sortie de la fonction d'échantillonnage et de maintien du corrélateur précoce et du corrélateur tardif sont jointes pour commander un générateur d'horloge pilotant une horloge utilisée :
par le corrélateur précoce et par le corrélateur tardif pour l'échantillonnage du flux CDMA, et
par au moins un générateur de signaux en tant qu'horloge de référence pour générer la séquence de synchronisation précoce et la séquence de synchronisation tardive ; et
dans lequel la fonction d'échantillonnage et de maintien est actionnée uniquement pendant l'intervalle de temps de la séquence de synchronisation non modulée dans la séquence de code CDMA reçue de sorte que la fonction d'échantillonnage et de maintien maintient la sortie du filtre jusqu'à ce qu'une nouvelle séquence de synchronisation est détectée.
